# EUROPEAN PATENT SPECIFICATION

(11) **EP 4 472 847 B1**
(45) Date of publication and mention of the grant of the patent: **24.06.2026**
(21) Application number: 23703858.3
(22) Date of filing: 31.01.2023
(51) Int. Cl.: B60D 1/46, B25J 5/00, B61G 1/00, B62B 5/00

(54) **A LOAD TRANSPORTING APPARATUS**
VORRICHTUNG ZUM TRANSPORTIEREN VON LASTEN
APPAREIL DE TRANSPORT DE CHARGE

(30) Priority: 31.01.2022 GB 202201239
(43) Date of publication of application: 11.12.2024
(73) Proprietor: M-Mover Holdings Limited, Ashbourne, Derbyshire DE6 1HD (GB)
(72) Inventor: DAWSON, Jake, Ashbourne Derbyshire DE6 1HD (GB); EDMUNDS, Vince, Ashbourne Derbyshire DE6 1HD (GB); JONES, James, Ashbourne Derbyshire DE6 1HD (GB); OWEN, Andy, Ashbourne Derbyshire DE6 1HD (GB)
(74) Representative: Forresters IP LLP
(86) International application number: PCT/GB2023/050208
(87) International publication number: WO 2023/144566

(56) References cited:
- AU-A1- 2023 212 486
- CA-A1- 3 053 848
- CA-A1- 3 186 005
- CN-A- 109 159 827
- DE-A1- 102021 209 167
- DE-A1- 19 840 007
- DE-U1- 202014 003 501
- KR-B1- 102 315 069
- NL-B1- 2 022 330
- US-A1- 2019 202 249
- US-A1- 2022 332 158

## Description

### INTRODUCTION

Embodiments of the present invention relate to a load transporting apparatus.

Load transporting apparatus are used to assist a user with moving large or heavy loads. The apparatus may or may not include a power source to drive the load to a desired location.

DE202014003501 U1 discloses a motor-driven industrial truck that can be controlled by an externa operator for coupling a non-driven load carrier rolling on several wheels. US2019/202249 discloses a towing device for connecting an automatic guided vehicle to a carriage.

Embodiments of the present invention seek to alleviate one or more problems associated with the prior art.

### BRIEF DESCRIPTION OF THE INVENTION

According to an aspect of the invention we provide a load transporting apparatus including: a main body; at least one surface engaging wheel supporting the main body for moving the main body over a surface; a load engagement device for engagement with a load, and a carriage device, which is connected to the main body or the load engagement device; and a guide member, which is connected to the other of the main body and the load engagement device; wherein the carriage device and the guide member engage each other and permit sliding movement therebetween along an elongate axis, the carriage device having a first portion and a second portion, wherein the first portion extends towards a first side of the guide member and terminates at a first end and wherein the first portion includes a first engagement part which engages a first contact surface of the guide member; the second portion extends towards a second side of the guide member and terminates at a second end and wherein the second portion includes a second engagement part which engages a second contact surface of the guide member, and a hydraulic system including a piston, operatively connected to the load engagement device and the main body, a pump, which is fluidly connected to the piston, and controls movement of the piston, and an accumulator device, fluidly connected to the piston and pump, for providing levelling adjustment to compensate for changes in pressure on the load engagement device when it is engaged with the load.

Further optional features relating to the present invention are provided in the appended claims.

### BRIEF DESCRIPTION OF THE FIGURES

In order that the present disclosure may be more readily understood, preferable embodiments thereof will now be described, by way of example only, with reference to the accompanying drawings, in which:
FIGURE 1 is a perspective view of a load transporting apparatus, embodying the present disclosure;
FIGURE 2 is a side view of a load transporting apparatus, embodying the present disclosure;
FIGURE 3 is a perspective view of a load transporting apparatus, embodying the present disclosure;
FIGURE 4 is a view of part of a load transporting apparatus;
FIGURE 5 is a zoomed in partial view of the part in figure 4;
FIGURE 6 is a view of a part of a load transporting apparatus;
FIGURE 7 is a view of another part of a load transporting apparatus;
FIGURES 8A and 8B are views of a load approaching engagement with and subsequently in engagement with the load transporting apparatus;
FIGURE 9 is a side view of a load transporting apparatus in engagement with a load; and
FIGURES 10A, 10B and 10C are schematic views of a hydraulics system under different surface conditions.

### DETAILED DESCRIPTION OF THE DISCLOSURE

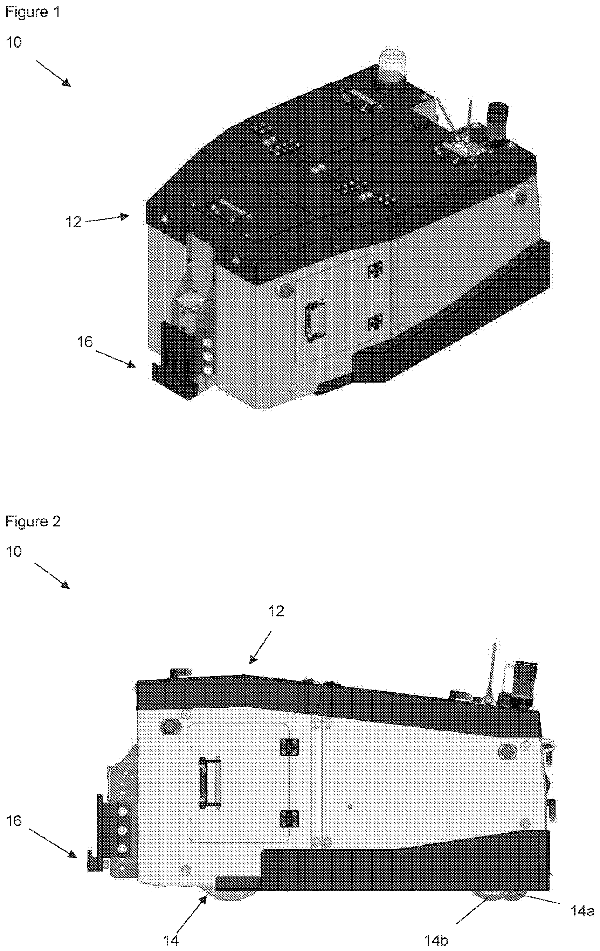

Referring to the figures (and particularly figures 1 to 3, 8A to 9), a load transporting apparatus 10 (also known as apparatus 10) is illustrated. The load transporting apparatus 10 includes a main body 12, at least one surface engaging wheel 14 and a load engagement device 16.

The surface engaging wheel 14 supports the main body 12 and moves the main body 12 over a surface (e.g. the ground). In the illustrated example (see figure 2), the surface engaging wheel 14 is rotatably driven by a motor. Further, in this example, the surface engaging wheel 14 is steerable (i.e. the wheel 14 has a generally central vertical axis about which the wheel 14 can be rotated to change the direction of the apparatus 10). The driven wheel 14 is positioned towards a front part of the main body 12 (i.e. close to the load engagement device 16).

In some embodiments (see figure 2) the apparatus 10 includes a castor wheel 14a which is able to swivel about a swivel axis. Further, in some embodiments, the apparatus 10 also includes a pair of freely rotating wheels 14b. One or more of these wheels is positions towards a rear part of the main body 12 (i.e. at an opposite end to the load engagement device 16).

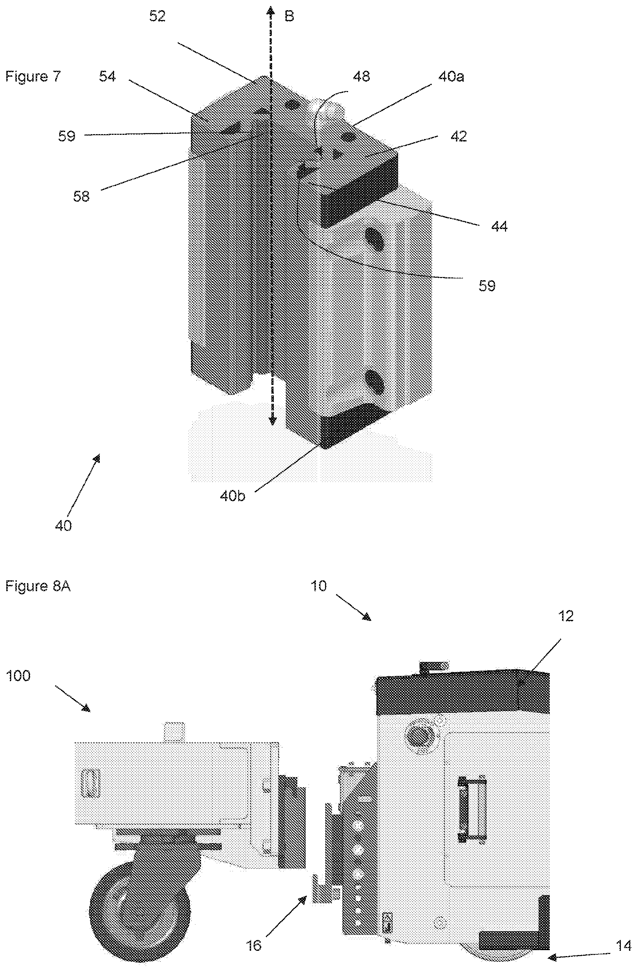

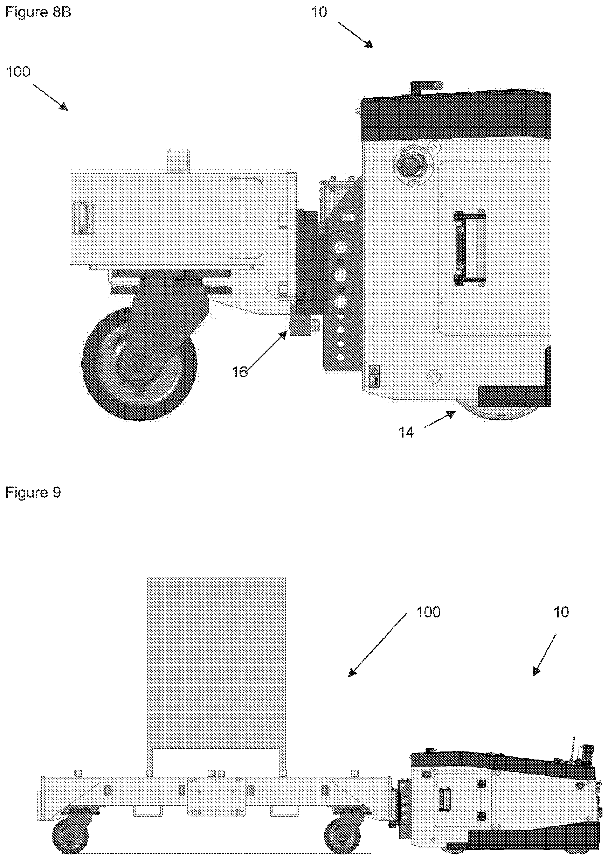

The load engagement device 16 is configured for engagement with a load 100. In the illustrated example (see figures 8A and 8B), the load engagement device 16 includes two hook portions that contact two corresponding hook portions on the load 100. In this example, the hook portions project upwards and the corresponding hook portions project downwards. It should be appreciated that the load engagement device 16 may be altered (in shape and / or size) depending on the load 100 being moved.

The main body 12 and the load engagement device 16 are connected together, such that the load engagement device 16 is moveable relative to the main body 12 (in this example, the load engagement device 16 is permitted to move upwards and downwards relative to the main body 12).

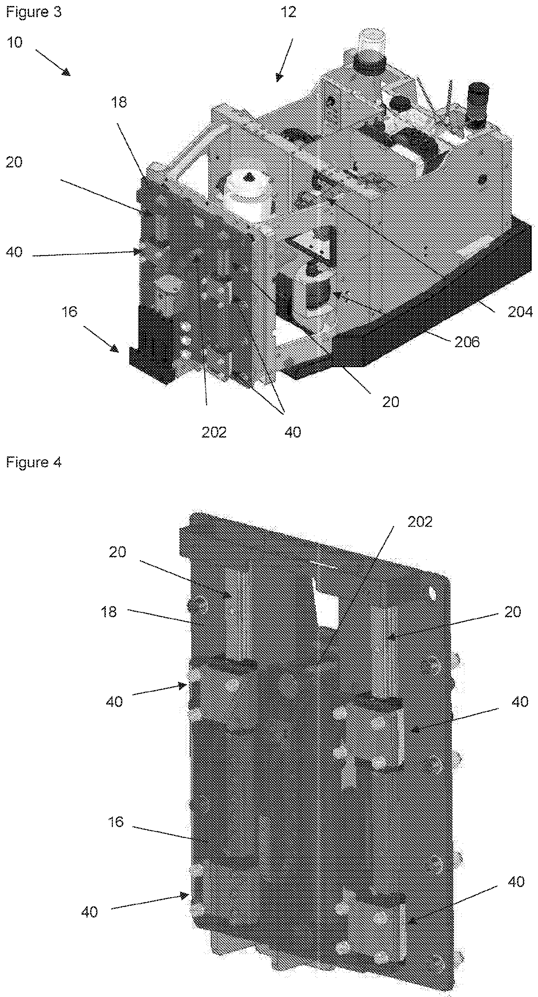

The connection between the main body 12 and the load engagement device 16 is provided by a guide member 20 and a carriage device 40. The carriage device 40 is connected to the main body 12 or the load engagement device 16 and the guide member 20 is connected to the other of the main body 12 and the load engagement device 16. In the illustrated examples (see particularly figures 3 and 4), a carriage device 40 is connected to the load engagement device 16 and a guide member 20 is connected to the main body 12. It should be appreciated that this orientation need not be the case and the connections could be vice versa.

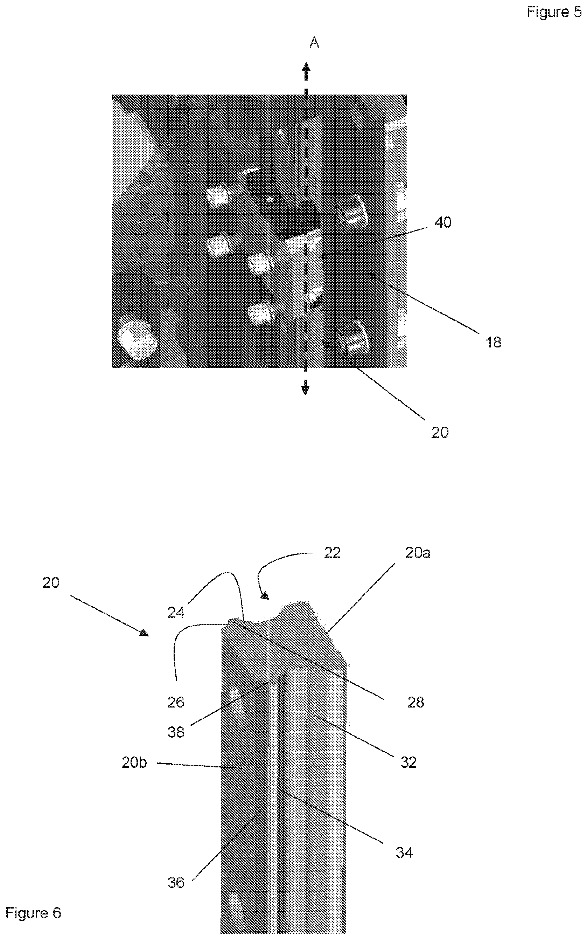

The carriage device 40 and the guide member 20 engage each other and permit sliding movement therebetween along an elongate axis (shown generally by "A" in figure 5).

In the present example (see particularly figures 4 to 6), the guide member 20 provides an elongate formation (in this example it is rail-like in that a an elongate contact and guide surface is provided). The guide member 20 is mounted in an upright configuration so that the carriage device 40 can slide up / down along the guide member 20.

In the present example, a rear surface 20a of the guide member 20 contacts a planar member 18 and the guide member 20 is secured to the planar member 18. For example, one or more bolts or other securing means extends through the guide member 20 from a front surface 20b to the rear surface 20a to attach the guide member 20 to the planar member 18. Thus, the guide member 20 is fixed relative to the planar member 18 (and the planar member 18, in this case, is fixed relative to the main body 12). As can be seen in the figures, the planar member 18 is secured to a front portion of the main body 12.

In some embodiments, the planar member 18 is flat or substantially flat, so that the guide members 20 are mounted in alignment with each other. The planar member 18 may be a single sheet of material - for example, a single machined or cast sheet of metal.

In the illustrated examples, the apparatus 10 includes a second guide member 20 which is arranged parallel to and spaced from the first guide member 20. The second guide member 20 includes the same features and is arranged in the same manner as the first guide member 20. Thus, the description above and below describes both guide members (and the same references are used for both guide members on the figures).

The guide member 20 has a first and a second side 22, 32 (see, for example, figure 6). The first side 22 includes a first contact surface 24 and the second side 32 includes a second contact surface 34. In some embodiments (such as the examples illustrated), the first side 22 has a pair of contact surfaces and the second side 32 also has a pair of contact surfaces. In other words, the first side 22 has the first contact surface 24 and a third contact surface 26. Further, the second side 32 has the second contact surface 34 and a fourth contact surface 36.

In some embodiments (see particularly the example in figure 6), the first and / or second contact surface 24, 34 of the guide member 20 is concave (in the illustrated example, each of the first to fourth contact surfaces 24, 34, 26, 36 is concave). In other words, when viewed from top-down or from top-up (or a horizontal cross-sectional view), one or more of the contact surfaces 24, 34, 26, 36 is curved or rounded, so that the outer surface across those surfaces is dished / forms a recess.

In some embodiments, the first and / or second contact surfaces 24, 34 extends parallel to the elongate axis A and parallel to each other (in the illustrated example, all four contact surfaces 24, 34, 26, 36 extend parallel to the elongate axis A and each other). In other words, the contact surfaces 24, 34, 26, 36 extend substantially vertically and form part of the outer surface of the guide member 20.

In some embodiments, the first and second contact surfaces 24, 34 are on opposing sides of the guide member 20. In the illustrated example, one pair of contact surfaces (e.g. the first and third contact surfaces 24, 26) are on one side (e.g. the first side 22) of the guide member 20 and the other pair of contact surfaces (e.g. the second and fourth contact surfaces 26, 36) are on the other, opposite, side (e.g. the second side 32) of the guide member 20. As can be seen in figure 6, the first and second contact surfaces 24, 34 are spaced apart (with the front surface 20b between). Further, the third and fourth contact surfaces 26, 36 are also spaced apart with the front surface 20b of the guide member 20 between.

In some embodiments, the first and second contact surfaces 24, 34 are generally outwardly facing from the guide member 20 (and, thus, face generally away from each other). In the illustrated example, the third and fourth contact surfaces 26, 36 also face generally outwardly from the guide member 20.

In this example, the first and third contact surfaces 24, 34 form front and back surfaces, respectively, of a projection 28 that extends outwards from the guide member 20. Thus, the first and third contact surfaces 24, 26 face generally away from each other and are spaced apart on either side of the projection 28.

In some embodiments, the guide member 20 has the same profile on the second side 32. In this case, the second and fourth contact surfaces 34, 36 form front and back surfaces, respectively, of a projection 38 that extends outwards from the guide member 20. Thus, the second and fourth contact surfaces 34, 36 face generally away from each other and are spaced apart on either side of the projection 38.

In other words, each side of the guide member 20 has a pair of engaging surfaces which are oriented outwards from each other. In embodiments, a first perpendicular axis drawn from a tangent in a central section of the first contact surface 24 will cross a second perpendicular axis drawn from a tangent in a central section of the second contact surface 26 approximately perpendicularly and / or transversely (likewise for the second and fourth contact surfaces 34, 36). As can be seen below, a similar relationship is found in the carriage device 40 to allow engagement between the carriage 40 and the guide 20.

In some embodiments, the guide member 20 progressively narrows to a central portion and subsequently flares outwardly as it approaches the rear surface 20a.

The carriage device 40 is shaped / configured to engage at least the first and second contact surfaces 24, 34 of the guide member 20. In the present example, the carriage device 40 includes a rear surface 40a that contacts and is secured to the load engagement device 16. For example, one or more bolts or other securing means extends through a part of a front-facing surface 40b to the rear surface 20a to attach the carriage device 40 to the load engagement device 16. Thus, the carriage device 40 is fixed relative to the load engagement device 16.

In the illustrated example (see particularly figure 4), a pair of carriage devices 40 are provided on a single guide member 20. In other words, an upper and a lower carriage device 40 are engaged with the same guide member 20 and spaced axially from each other. Both carriage devices 40, in this example, have the same features and thus the same reference numbers are used for each device 40.

The carriage device 40 includes a first portion 42 and a second portion 52 (see figure 7, for example). Both the first and the second portions 42, 52 extend generally transversely outwards. In other words, the first portion 42 extends towards the first side 22 of the guide member 20 and the second portion 52 extends towards the second side 32 of the guide member 20.

Further, the first portion 42 extends around the first side 22 and terminates at a first end 44. The second portion 42 extends around the second side 32 and terminates at a second end 54. In other words, the carriage device 40 is generally U-shaped (for example, a central channel extends through the entire device 40) - the first portion 42 forms one arm of the "U" and the second portion 52 forms the other arm of the "U".

The first portion 42 includes a first engagement part 48 which engages the first contact surface 24 of the guide member 20. Further, the second portion 52 includes a second engagement part 58 which engages the second contact surface 34 of the guide member 20. When the carriage device 40 is engaged with the guide member 20, the first and second engagement parts 48, 58 extend lengthwise of the carriage device 40 and generally parallel with the first and second contact surfaces 24, 34, respectively.

In other words, the carriage device 40 extends generally parallel to the guide member 20. For example, the first engagement part 48 extends generally parallel to the first contact surface 24 and the second engagement part 58 extends generally parallel to the second contact surface 34.

In some embodiments (such as the examples illustrated), the first portion 42 has a pair of engagement parts and the second portion 52 also has a pair of engagement parts. In other words, the first portion 42 has the first engagement part 48 and a third engagement part 49. Further, the second portion 52 has the second engagement part 58 and a fourth engagement part 59.

In some embodiments (see particularly the example in figure 7), the first and / or second engagement parts 48, 58 include a convex surface (in the illustrated example, each of the first to fourth engagement parts 48, 58, 49, 59 includes a convex surface). In other words, when viewed from top-down or from top-up, one or more of the engagement parts 48, 58, 49, 59 includes a curved or rounded surface, so that the outer surface across those surfaces is domed.

In some embodiments, the first and / or second engagement parts 48, 58 extends parallel to an elongate axis B (in the illustrated example, all four engagement parts 48, 58, 49, 59 extend parallel to the elongate axis B). In other words, the engagement parts 48, 58, 49, 59 extend substantially vertically and form part of the inner surface of the carriage device 40. It should be appreciated that, in use, elongate axis A (through the guide member 20) will be generally parallel to elongate axis B (through the carriage device 40).

It should be appreciated that in an alternative embodiment the contact surfaces could be convex and the engagement parts could be concave and they would still interact with each on the same way as described here.

The first and second portions 42, 52 form opposing sides of the carriage device 40. Thus the first and second engagement parts 48, 58 are on opposing sides of the carriage device 40. In the illustrated example, one pair of engagement parts (e.g. the first and third engagement parts 48, 49) are on one side and the other pair of engagement parts (e.g. the second and fourth engagement parts 58, 59) are on the other, opposite, side. As can be seen in figure 7, the first and second engagement parts 48, 58 are spaced apart. Further, the third and fourth engagement parts 49, 59 are also spaced apart.

In some embodiments, the first and second engagement parts 48, 58 are generally inwardly facing (and, thus, face generally towards each other). In the illustrated example, the third and fourth engagement parts 49, 59 also face generally inwardly.

It should be appreciated that the carriage device 40 extends around the guide member 20 (i.e. the first portion 42 wraps transversely around one side of the guide member 20 and the second portion 52 wraps transversely around the opposing side of the guide member 20 in the same way). Thus, each side surface of the guide member 20 is enclosed by the carriage 40. This allows the forces through the first and second engagement parts 48, 58 (and third and fourth 49, 59) and the first and second contact surfaces 24, 34 (and third and fourth 26, 36) to be distributed evenly through the surfaces in contact. Thus, the connection between the main body 12 and load engagement device 16 is able to support a higher load and there is a reduction in the probability of jamming. Further, the carriage 40 supports against the guide member 20 horizontally, so that a sideways shear force has a reduced impact on the connection. This improves the life of the parts and reduces uneven wear.

In other words, the first portion 42 extends around three sides of the guide member 20 (i.e. across a front surface and around a projection of the guide member - in other words, a side surface and a back surface) and likewise the second portion 52 does the same on an opposing side of the guide member 20. In the illustrated example, the guide member 20 forms a rail and the carriage device 40 grips around four sides of the rail (without extending all the way around) and, thus, ensures only relative up/down (i.e. generally vertical) movement is permitted while forces / movement in all other directions is limited by the support formed by the engagement between the carriage device 40 and the guide member 20.

In some embodiments, the first and / or second engagement part 48, 58 at least partially formed from a track of ball bearings (it should be appreciated that the figures do not show individual ball bearings). In the present example, each of the engagement parts 48, 58, 49, 59 is formed from a track of ball bearings. In other words, multiple ball bearings are moveably supported along the respective engagement part 48, 58, 49, 59. Each ball bearing provides a convex outer surface, a part of which engages with the respective contact surface 24, 34, 26, 36 of the guide member 20. In use, as the carriage device 40 slides up / down the guide member 20, the ball bearings move along a continuous / looped track (i.e. from the bottom to the top of the engagement part 48, 58, 49, 59 and around a further track and back to the bottom again or vice versa).

In an alternative embodiment, the first and / or second engagement part 48, 58 is at least partially formed from a plastics material, e.g. nylon. In some examples, all four engagement surfaces 48, 58, 49, 59 may include a part formed from nylon.

It should be appreciated that in the illustrated examples, the apparatus 10 includes two guide members 20 and two pairs of carriage devices 40. As can be seen in figures 3 and 4, the guide members 20 are arranged in the same plane as each other (on the planar member 18) and spaced laterally apart. All four carriage devices 40 are arranged in the same plane as each other - an upper and lower carriage device 40 engages the first guide member 20 and a further upper and lower carriage device 40 engages the second guide member 20.

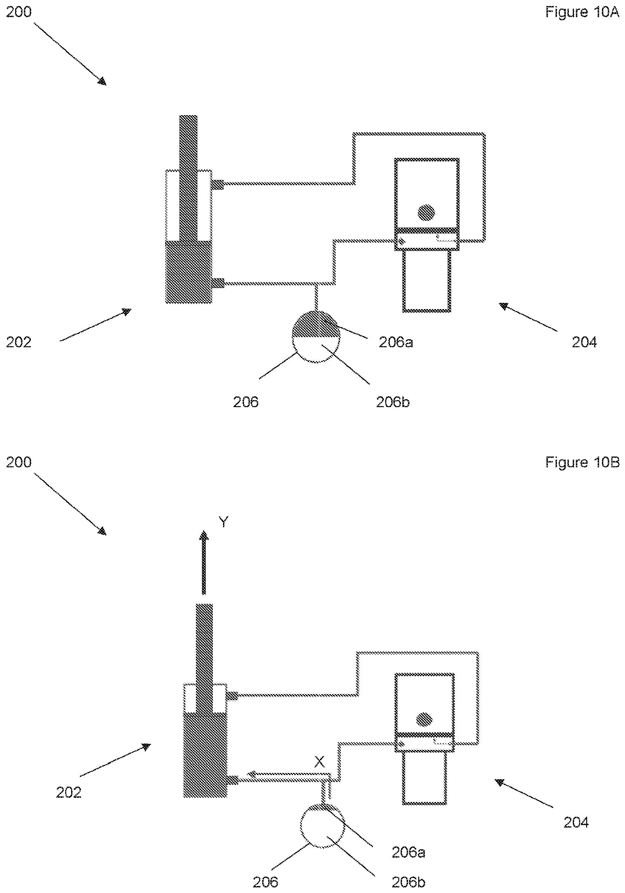

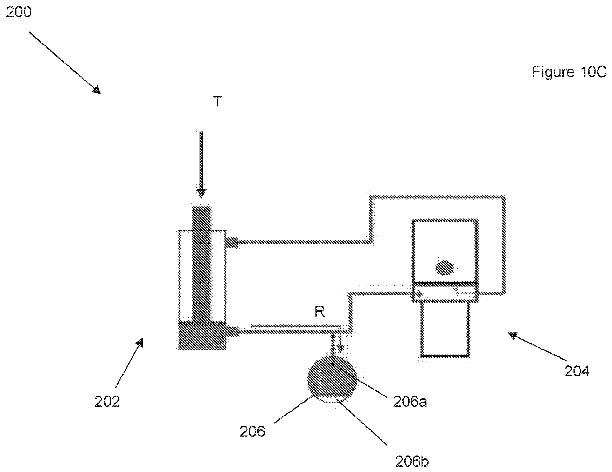

In some embodiments, the movement between the main body 12 and the load engagement device 16 is powered by a hydraulic system 200 (a schematic example of which is shown in figures 10A, 10B and 10C). The hydraulic system 200 includes a piston 202 and a pump 204, which are fluidly connected together.

The piston 202 is operatively connected to the load engagement device 16 and the main body 12 (see figure 4). Thus, when the pump 204 transfers fluid to the desired side / chamber of the piston 202, the load engagement device 16 moves up or down (described in more detail below).

In some embodiments, the hydraulic system 200 includes an accumulator device 206. The accumulator device 206 is fluidly connected to the piston 202 and the pump 204 and provides levelling adjustment of the load engagement device 16 during use (described in more detail later in the description). The accumulator device 206 includes an internal volume which is split in two chambers 206a, 206b. The first chamber 206a can be filled with fluid and is fluidly connected to the pump 204 / piston 202. The second chamber 206b is filled with a compressible gas, such as nitrogen, for example. In some embodiments, the first chamber is provided by a deformable diaphragm. This allows the gas in the second chamber 206b to compress / expand to maintain the fluid in the first chamber 206a in equilibrium with the fluid in the piston 202 / pump 204.

The accumulator device 206 operates at a faster rate than the pump 204 to adjust the fluid in the system - i.e. by allowing more fluid into the first chamber 206a from the piston 202 or forcing fluid out of the first chamber 206a to the piston 202 - and, thus, provides fine tuning on the level of the load engagement device 16 (and, thus, in turn allows the load engagement device 16 to maintain engagement with the load 100 on uneven terrain when the apparatus 10 and the load 100 are not moving in sync with each other). This operation is discussed in more detail further below.

In some embodiments, the hydraulic system 200 includes a pair of pistons. The pistons may be spaced apart and positioned one on either side of the main body 12. Thus, the main body 12 and the load engagement device 16 are connected through the hydraulic system 200 in two locations - this allows the pistons to pass more force through the connection between them (in comparison to a single piston). The hydraulic system 200 includes a splitter that diverts the fluid to both pistons in equal measure. This arrangement may be particularly advantageous for loading apparatus that are configured to move very heavy loads.

In some embodiments, the load transporting apparatus 10 is operable to be controlled from a remote device. In other words, an operator does not need to be in contact with the apparatus 10 to control / drive it to a desired location as a remote control may be used instead.

Details of the use / operation of the apparatus 10 will now be discussed.

As discussed briefly above, figures 8A and 8B illustrate the apparatus 10 being moved into engagement with a load 100 and, thus, moving to a condition in which the apparatus 10 can be used to move / drive the load 100 to a desired location. Figure 8A illustrates the apparatus 10 and the load 100 not yet coupled - the load engagement device 16 is in a relatively lowered position so that it can move into position under the load 100 when the apparatus 10 is moved towards the load 100.

When the load engagement device 16 aligns with the desired portion of the load 100, the apparatus 10 is stopped / halted. The load engagement device 16 is brought into engagement with the load 100 (see figure 8B). In this example, this is achieved by moving the load engagement device 16 upwards relative to the main body 12. More particularly, the carriage device 40 is slid upwards on the guide member 20 until the appropriate height is reached where the load engagement device 16 engages the corresponding receiving device on the load 100.

In the present example, the carriage device 40 (and, hence, the load engagement device 16) is moved upwards using the hydraulic system 200. The pump 204 moves fluid into a lower chamber of the piston 202, which forces the piston rod upwards. The carriage device 40 (and, thus, the load engagement device 16) is attached to the movable part of the piston 202 and is, therefore, moved upwards too. The pump 204 continues to move fluid into the lower chamber of the piston 202 (and, thus, move the carriage device 40) until the apparatus 10 takes a part of the load 100 weight onto the load engagement device 16 (i.e. weight transfer from the load 100 to the apparatus 10 occurs). Once the apparatus 10 is "loaded" (shown in figure 9), it is able to move the load 100 around (e.g. via an operator control device or the like).

During transport, the apparatus 10 may need to navigate one or more uneven ground surfaces (e.g. generally uneven terrain and / or ramps up / down). The engagement between the load 100 and the engagement device 16 is important since the weight transfer to the apparatus 10 is what allows the apparatus 10 to have enough grip on a surface to be able to drive the load 100 around. Thus, uneven terrain can be difficult to navigate because the engagement between the load 100 and the load engagement device 16 can alter, resulting in a loss of grip of the apparatus 10 or unbalancing / tipping of the apparatus 10.

The combination of the carriage device 40 / guide member 20 and the accumulator device 206 in the hydraulics system 200 operate together to ensure the load engagement device 16 maintains adequate / ideal loading from the load 100 on uneven ground. As mentioned above, figures 10A, 10B and 10C illustrate the action of the hydraulics system 200 in different terrain conditions.

Figure 10A illustrates the system on generally even ground (analogous to the load 100 and apparatus 10 in figures 8B and 9). In this example, the pump 204 pressurises the piston 202, so that the load engagement device 16 and the load 100 engage as discussed above. The accumulator device 206 also acts to balance its pressure with the pressure provided by the pump 204 - the nitrogen or other gas is compressed, so that the fluid pressure in the accumulator device 206 (the first chamber 206a) matches that of the rest of the system 200. In this example, the pump 204 includes a one-way valve which prevents fluid from returning from the piston 202 / accumulator device 206 - thus, the pressure is maintained in one side of the system 200.

On level ground, continuous and consistent engagement between the load 100 and the apparatus 10 is maintained and the apparatus 10 is able to move the load 100 as desired.

Figure 10B illustrates the system 200 on a downwards incline (where the apparatus 10 level drops down and the load 100 does not drop at the same time). Without any levelling adjustment, the load engagement device 16 is now lower than the engaged portion of the load 100. This results in a loss of weight transfer from the load 100 to the apparatus 10 (end, thus, a loss in drive ability). In the present example, the accumulator device 206 compensates to provide load engagement device 16 level adjustment. The weight on the load engagement device 16 drops (as the load 100 lifts up) and as such the pressure on the piston rod reduces (and, the pressure in the hydraulics system 200 reduces). This allows the gas in the accumulator device 206 (the second chamber 206b) to expand - thus, fluid is forced out of the accumulator device 206 (out from the first chamber 206a) and into the piston 202 (see arrow "X" in figure 10B). As can be seen in figure 10B, the body of fluid in the first chamber 206a of the accumulator device 206 has been emptied (or at least reduced) and the fluid in the lower chamber of the piston 202 has increased (and the piston rod is moved upwards - see arrow "Y" in figure 10B). This action quickly moves the carriage device 40 upwards on the guide member 20 (and thus, the load engagement device 16 also moves upwards) and engagement with the load 100 is maintained. This allows the apparatus 10 to continue moving the load 100 without a loss of grip and / or drive.

Figure 10C illustrates the system 200 on an upwards incline (where the apparatus 10 level moves up and the load 100 does not rise at the same time). Without any levelling adjustment, the load engagement device 16 must accept more weight from the load 100. This results in an increase in weight transfer from the load 100 to the apparatus 10 (which could result in unbalancing or tipping of the apparatus 10). In the present example, the accumulator device 206 again compensates to provide load engagement device 16 level adjustment. The weight on the load engagement device 16 increases and as such the pressure on the piston rod increases (and, the pressure in the hydraulics system 200 increases). This forces the gas in the second chamber 206b of the accumulator device 206 to compress - thus, fluid is forced into the first chamber 206a of the accumulator device 206 and out of the piston 202 (see arrow "R" in figure 10C). As can be seen in figure 10C, the body of fluid in the first chamber 206a of the accumulator device 206 has been filled (or at least increased) and the fluid in the lower chamber of the piston 202 has reduced (and the piston rod is moved downwards - see arrow "T" in figure 10C). This action quickly moves the carriage device 40 downwards on the guide member 20 (and thus, the load engagement device 16 also moves down) and engagement (and the level of weight transfer) with the load 100 is maintained. This allows the apparatus 10 to continue moving the load 100 and avoiding the apparatus 10 becoming unbalanced or tipping due to the altered weight distribution caused by the incline.

In general terms, when there is a decrease in pressure on the load engagement device 16, the accumulator 206 releases fluid into the piston 202 and causes raising of the or each carriage device 40 on the or each guide member 20 (and, hence raising of the load engagement device 16). When there is an increase in pressure on the load engagement device 16, the accumulator 206 accumulates fluid and causes lowering of the or each carriage device 40 on the or each guide member 20 (and, hence lowering of the load engagement device 16).

The carriage device 40 and the guide member 20 work together to improve the apparatus 10. The guide member 20 allows the carriage device 40 to move with less frictional losses than previous designs. Thus, the overall mechanism is more efficient. Embodiments of the loading apparatus 10 may be operable to move heavy loads up to around 70000kg. A single unit 10 may be able to move a load up to around this weight and multiple units could be used together / in combination to move multiples of this weight.

It should be appreciated, that sliding movement between the carriage device 40 and the guide member 20 is permitted when the load transporting apparatus 10 is in use (i.e. when a heavy load is connected / is being moved around by the apparatus 10).

This is especially true when using a pair of guide members 20 because misalignment between the guide members can cause excessive forces on the carriage device 40 as they are moved along the guide members 20 (for example, friction and torsion forces) - in turn, causes more power to be used to move the carriage devices. The described arrangement above allows the guide members 20 to be mounted with better precision (i.e. on the single planar member 18). Thus, such operational stresses are minimised or at least reduced. The planar member 18 can be manufactured with better precision - for example, it could be a single machined plate of metal - which in turn increases the alignment of the guide members 20 attached to it. The same is true of the mounting of the carriage devices 40 - the better the alignment, the more efficient movement between the carriage devices 40 and the guide members 20 is. Thus, the described disclosure improves the apparatus 10 by reducing the operating tolerances of the carriage device 40 and guide member 20.

The combination of the described carriage device 40 / guide member 20 and the hydraulics system 200 in turn operates more smoothly. This allows the accumulator device 206 to be more effective in fine levelling control as the carriage device 40 moves more efficiently and potentially more quickly to the necessary position to maintain the ideal loading on the load engagement device 16.

In some embodiments, this may allow a smaller accumulator device 206 to be used (i.e. a device with a smaller fluid capacity) because not as much work is required to move the carriage device 40 when the apparatus 10 is on uneven terrain.

When used in this specification and claims, the terms "comprises" and "comprising" and variations thereof mean that the specified features, steps or integers are included. The terms are not to be interpreted to exclude the presence of other features, steps or components.

## Claims

1. A load transporting apparatus (10) including:
a main body (12);
at least one surface engaging wheel (14) supporting the main body for moving the main body over a surface;
a load engagement device (16) for engagement with a load (100), and
a carriage device (40), which is connected to the main body or the load engagement device;
and a guide member (20), which is connected to the other of the main body and the load engagement device; wherein
the carriage device and the guide member engage each other and permit sliding movement therebetween along an elongate axis,
the carriage device having
a first portion and a second portion (42, 52), wherein
the first portion extends towards a first side (22) of the guide member and terminates at a first end (44) and wherein the first portion includes a first engagement part (48) which engages a first contact surface (24) of the guide member,
the second portion extends towards a second side (32) of the guide member and terminates at a second end (54) and wherein the second portion includes a second engagement part (58) which engages a second contact surface (34) of the guide member, and **characterized by**
a hydraulic system (200) including
a piston (202), operatively connected to the load engagement device (16) and the main body (12),
a pump (204), which is fluidly connected to the piston, and controls movement of the piston, and
an accumulator device (206), fluidly connected to the piston (202) and pump (204), for providing levelling adjustment to compensate for changes in pressure on the load engagement device when it is engaged with the load (100).

2. A load transporting apparatus (10) according to claim 1 wherein the first and / or second contact surface (24, 34) of the guide member (20) is concave and extends parallel to the elongate axis and the corresponding first and / or second engagement part (48, 58) of the carriage device (40) includes a convex surface.

3. A load transporting apparatus (10) according to any one of the preceding claims wherein the first and second contact surfaces (24, 34) are on opposing sides of the guide member (20).

4. A load transporting apparatus (10) according to any one of the preceding claims wherein
the guide member (20) includes a third contact surface (26) on the first side (22) of the guide member and a fourth contact surface (36) on the second side (32) of the guide member, and
the carriage device (40) includes a third engagement part (49) on the first portion (42) and a fourth engagement part (59) on the second portion (52) wherein the third engagement part engages the third contact surface of the guide member and the fourth engagement part engages the fourth contact surface.

5. A load transporting apparatus (10) according to any one of the preceding claims wherein the first and second contact surfaces (24, 34) are generally outwardly facing from the elongate axis of the guide member (20) , and optionally, when dependent on claim 4, the third and fourth contact surfaces (26, 36) are also generally outwardly facing from the elongate axis of the guide member.

6. A load transporting apparatus (10) according to any one of the preceding claims wherein the first and second contact surfaces (24, 34) are generally parallel to each other and optionally general parallel to a central axis of the guide member (20), and optionally, when dependent on claim 4 or 5, the third and fourth contact surfaces (26, 36) are also generally parallel to each other and optionally all of the contact surfaces are generally parallel to the central axis of the guide member.

7. A load transporting apparatus (10) according to any one of the preceding claims wherein a further, second carriage device (40) is provided, which engages with the guide member (20).

8. A load transporting apparatus (10) according to any one of the preceding claims including a second guide member (20) which is arranged parallel to and spaced from the first guide member (20), and optionally wherein the first and second guide members (20) connect to a planar member (18) and, optionally the planar member is formed from a single sheet of material, and / or wherein the second guide member (20) engages with a further carriage device (40) and optionally a pair of further carriage devices .

9. A load transporting apparatus (10) according to any one of the preceding claims wherein the first and / or second engagement part (48, 58) of the or each carriage device (40) includes ball bearings.

10. A load transporting apparatus (10) according to any one of claims 1 to 9 wherein the first and / or second engagement part (48, 58) of the carriage device (40) is at least partially formed from nylon.

11. A load transporting apparatus (10) according to any one of the preceding claims wherein the accumulator device (206) includes a first chamber (206a) fluidly connected to the pump (204) and piston (202) and a second chamber (206b) which is filled with compressible air.

12. A load transporting apparatus (10) according to any one of the preceding claims wherein when there is a decrease in pressure on the load engagement device (16), the accumulator (206) releases fluid into the piston (202) and causes raising of the load engagement device and / or when there is an increase in pressure on the load engagement device, the accumulator accumulates fluid and causes lowering of the load engagement device.

13. A load transporting apparatus (10) according to any one of the preceding claims wherein the surface engaging wheel (14) is rotatably driven by a motor and / or the surface engaging wheel is steerable.

14. A load transporting apparatus (10) according to any one of the preceding claims wherein the carriage device (40) extends generally parallel to the guide member (20) and / or wherein the first engagement part (48) extends generally parallel to the first contact surface (24) and the second engagement part (58) extends generally parallel to the second contact surface (34).

15. A load transporting apparatus (10) according to any one of the preceding claims including a castor wheel (14a) having a swivel axis and / or including a pair of freely rotating wheels (14b) and / or which is suitable for moving a load (100) up to around 70000kg.

## Patentansprüche

1. Vorrichtung (10) zum Transportieren von Lasten, umfassend:
Einen Hauptkörper (12);
mindestens ein Laufrad (14), das den Hauptkörper trägt, um den Hauptkörper über eine Oberfläche zu bewegen;
Vorrichtung (16) zur Aufnahme einer Last, um eine Last (100) in Eingriff zu bringen, und
eine Schlittenvorrichtung (40), die mit dem Hauptkörper oder der Vorrichtung zur Aufnahme einer Last verbunden ist;
und ein Führungselement (20), das mit dem anderen Teil des Hauptkörpers und der Vorrichtung zur Aufnahme einer Last verbunden ist; wobei
die Schlittenvorrichtung und das Führungselement ineinandergreifen und eine Gleitbewegung zwischen ihnen entlang einer Längsachse, ermöglichen, wobei die Schlittenvorrichtung einen Teil und einen zweiten Teil (42, 52) aufweist, wobei
sich der erste Abschnitt in Richtung einer ersten Seite (22) des Führungselements erstreckt und an einem ersten Ende (44) endet, wobei der erste Abschnitt einen ersten Eingriffsteil (48) aufweist, der eine erste Kontaktfläche (24) des Führungselements in Eingriff bringt;
sich der zweite Abschnitt in Richtung einer zweiten Seite (32) des Führungselements erstreckt und an einem zweiten Ende (54) endet, wobei der zweite Abschnitt einen zweiten Eingriffsteil (58) aufweist, der eine zweite Kontaktfläche (34) des Führungselements in Eingriff bringt, und **gekennzeichnet durch**
ein hydraulisches System (200), das Folgendes umfasst:
Einen Kolben (202), der mit der Lastaufnahmevorrichtung (16) und dem Hauptkörper (12) funktionell verbunden ist,
eine Pumpe (204), die fluidisch mit dem Kolben verbunden ist und die Bewegung des Kolbens steuert, und
eine mit dem Kolben (202) und der Pumpe (204) fluidisch verbundene Akkumulatorvorrichtung (206) zur Bereitstellung einer Nivellierungseinstellung, um Druckänderungen an der Lastaufnahmevorrichtung beim Eingriff mit der Last (100) auszugleichen.

2. Vorrichtung (10) zum Transportieren einer Last nach Anspruch 1, wobei die erste und/oder zweite Kontaktfläche (24, 34) des Führungselements (20) konkav ist und sich parallel zur Längsachse erstreckt und der entsprechende erste und/oder zweite Eingriffsteil (48, 58) der Transportvorrichtung (40) eine konvexe Fläche umfasst.

3. Vorrichtung (10) zum Transportieren von Lasten nach einem der vorhergehenden Ansprüche, wobei sich die erste und zweite Kontaktfläche (24, 34) auf gegenüberliegenden Seiten des Führungselements (20) befinden.

4. Vorrichtung (10) zum Transportieren von Lasten nach einem der vorhergehenden Ansprüche, wobei das Führungselement (20) eine dritte Kontaktfläche (26) auf der ersten Seite (22) des Führungselements und eine vierte Kontaktfläche (36) auf der zweiten Seite (32) des Führungselements umfasst, und
die Schlittenvorrichtung (40) einen dritten Eingriffsteil (49) am ersten Abschnitt (42) und einen vierten Eingriffsteil (59) am zweiten Abschnitt (52) umfasst, wobei der dritte Eingriffsteil die dritte Kontaktfläche des Führungselements in Eingriff bringt und der vierte Eingriffsteil die vierte Kontaktfläche in Eingriff bringt.

5. Vorrichtung (10) zum Transportieren von Lasten nach einem der vorhergehenden Ansprüche, wobei die erste und zweite Kontaktfläche (24, 34) im Allgemeinen von der Längsachse des Führungselements (20) nach außen gerichtet sind und gegebenenfalls, abhängig von Anspruch 4, auch die dritte und vierte Kontaktfläche (26, 36) im Allgemeinen von der Längsachse des Führungselements nach außen gerichtet sind.

6. Vorrichtung (10) zum Transportieren von Lasten nach einem der vorhergehenden Ansprüche, wobei die erste und zweite Kontaktfläche (24, 34) im Allgemeinen parallel zueinander und optional im Allgemeinen parallel zu einer Mittelachse des Führungselements (20) verlaufen und optional, abhängig von Anspruch 4 oder 5, die dritte und vierte Kontaktfläche (26, 36) ebenfalls im Allgemeinen parallel zueinander verlaufen und optional alle Kontaktflächen im Allgemeinen parallel zur Mittelachse des Führungselements verlaufen.

7. Vorrichtung (10) zum Transportieren von Lasten nach einem der vorhergehenden Ansprüche, bei der eine weitere, zweite Schlittenvorrichtung (40) vorgesehen ist, die das Führungselement (20) in Eingriff bringt.

8. Vorrichtung (10) zum Transportieren von Lasten nach einem der vorhergehenden Ansprüche, die ein zweites Führungselement (20) umfasst, das parallel zum ersten Führungselement (20) angeordnet und von diesem beabstandet ist, wobei das erste und das zweite Führungselement (20) optional mit einem ebenen Element (18) verbunden sind und das ebene Element optional aus einer einzigen Materialplatte geformt ist, und/oder wobei das zweite Führungselement (20) eine weitere Schlittenvorrichtung (40) und optional ein Paar weiterer Schlittenvorrichtungen in Eingriff bringt.

9. Vorrichtung (10) zum Transportieren von Lasten nach einem der vorhergehenden Ansprüche, wobei das erste und/oder zweite Eingriffsteil (48, 58) der oder jeder Schlittenvorrichtung (40) Kugellager umfasst.

10. Vorrichtung (10) zum Transportieren von Lasten nach einem der Ansprüche 1 bis 9, wobei das erste und/oder zweite Eingriffsteil (48, 58) der Schlittenvorrichtung (40) zumindest teilweise aus Nylon ausgebildet ist.

11. Vorrichtung (10) zum Transportieren von Lasten nach einem der vorhergehenden Ansprüche, wobei die Akkumulatorvorrichtung (206) eine erste Kammer (206a), die fluidisch mit der Pumpe (204) und dem Kolben (202) verbunden ist, sowie eine zweite Kammer (206b) umfasst, die mit komprimierbarer Luft gefüllt ist.

12. Vorrichtung (10) zum Transportieren von Lasten nach einem der vorhergehenden Ansprüche, wobei bei einer Druckminderung an der Lastaufnahmevorrichtung (16) der Akkumulator (206) Flüssigkeit in den Kolben (202) abgibt und dadurch bewirkt, dass die Lastaufnahmevorrichtung angehoben wird und/oder bei einer Druckerhöhung an der Lastaufnahmevorrichtung sich Flüssigkeit im Akkumulator sammelt und dadurch bewirkt, dass die Lastaufnahmevorrichtung abgesenkt wird.

13. Vorrichtung (10) zum Transportieren von Lasten nach einem der vorhergehenden Ansprüche, wobei das mit der Oberfläche in Eingriff stehende Rad (14) drehbar von einem Motor angetrieben wird und/oder das mit der Oberfläche in Eingriff stehende Rad lenkbar ist.

14. Vorrichtung (10) zum Transportieren von Lasten nach einem der vorhergehenden Ansprüche, wobei sich die Schlittenvorrichtung (40) im Wesentlichen parallel zum Führungselement (20) erstreckt und/oder wobei sich der erste Eingriffsteil (48) im Wesentlichen parallel zur ersten Kontaktfläche (24) und der zweite Eingriffsteil (58) im Wesentlichen parallel zur zweiten Kontaktfläche (34) erstreckt.

15. Vorrichtung (10) zum Transportieren von Lasten nach einem der vorhergehenden Ansprüche, die ein Lenkrad (14a) mit einer Schwenkachse und/oder ein Paar frei drehbarer Räder (14b) umfasst und/oder die zum Bewegen einer Last (100) bis zu etwa 70000 kg geeignet ist.

## Revendications

1. Un appareil de transport de charge (10) comprenant :
un corps principal (12) ;
au moins une roue de mise en prise de surface (14) supportant le corps principal pour déplacer le corps principal sur une surface ;
un dispositif de mise en prise de charge (16) pour être mis en prise avec une charge (100) et
un dispositif de chariot (40), raccordé au corps principal ou au dispositif de mise en prise de charge ;
et un élément de guidage (20), raccordé à l'autre du corps principal et du dispositif de mise en prise de charge ; dans lequel
le dispositif de chariot et l'élément de guidage viennent en prise l'un avec l'autre et permettent un mouvement de coulissement entre eux le long d'un axe allongé, le dispositif de chariot ayant :
une première partie et une deuxième partie (42, 52),
la première partie s'étendant vers un premier côté (22) de l'élément de guidage et se terminant au niveau d'une première extrémité (44), la première partie comprenant une première partie de mise en prise (48) qui met en prise une première surface de contact (24) de l'élément de guidage ;
la deuxième partie s'étendant vers un deuxième côté (32) de l'élément de guidage et se terminant au niveau d'une deuxième extrémité (54), la deuxième partie comprenant une deuxième partie de mise en prise (58) qui met en prise une deuxième surface de contact (34) de l'élément de guidage,
et **caractérisé par** :
un système hydraulique (200) comportant :
un piston (202), raccordé fonctionnellement au dispositif de mise en prise de charge (16) et au corps principal (12),
une pompe (204), raccordée fluidiquement au piston, et contrôlant le mouvement du piston, et
un dispositif accumulateur (206), raccordé fluidiquement au piston (202) et à la pompe (204), pour assurer un réglage de niveau destiné à compenser les variations de pression sur le dispositif de mise en prise de charge quand il est en prise avec la charge (100).

2. Un appareil de transport de charge (10) selon la revendication 1, dans lequel les première et / ou deuxième surfaces de contact (24, 34) de l'élément de guidage (20) sont concaves et s'étendent parallèlement à l'axe allongé et les première et / ou deuxième parties de mise en prise (48, 58) du dispositif de chariot (40) comportent une surface convexe.

3. Un appareil de transport de charge (10) selon une quelconque revendication précédente, dans lequel les première et deuxième surfaces de contact (24, 34) sont sur des côtés opposés de l'élément de guidage (20).

4. Un appareil de transport de charge (10) selon une quelconque revendication précédente, dans lequel l'élément de guidage (20) comporte une troisième surface de contact (26) sur le premier côté (22) de l'élément de guidage et une quatrième surface de contact (36) sur le deuxième côté (32) de l'élément de guidage, et le dispositif de chariot (40) comporte une troisième partie de mise en prise (49) sur la première partie (42) et une quatrième partie de mise en prise (59) sur la deuxième partie (52), la troisième partie de mise en prise mettant en prise la troisième surface de contact de l'élément de guidage et la quatrième partie de mise en prise mettant en prise la quatrième surface de contact .

5. Un appareil de transport de charge (10) selon une quelconque revendication précédente, dans lequel les première et deuxième surfaces de contact (24, 34) sont généralement orientées vers l'extérieur par rapport à l'axe allongé de l'élément de guidage (20), et éventuellement, quand il dépend de la revendication 4, les troisième et quatrième surfaces de contact (26, 36) sont aussi généralement orientées vers l'extérieur par rapport à l'axe allongé de l'élément de guidage.

6. Un appareil de transport de charge (10) selon une quelconque revendication précédente, dans lequel les première et deuxième surfaces de contact (24, 34) sont généralement parallèles l'une à l'autre et éventuellement généralement parallèles à un axe central de l'élément de guidage (20), et éventuellement, quand il dépend de la revendication 4 ou 5, les troisième et quatrième surfaces de contact (26, 36) sont aussi généralement parallèles l'une à l'autre et éventuellement toutes les surfaces de contact sont généralement parallèles à l'axe central de l'élément de guidage.

7. Un appareil de transport de charge (10) selon une quelconque revendication précédente, dans lequel est prévu un deuxième dispositif de chariot (40) qui met en prise l'élément de guidage (20).

8. Un appareil de transport de charge (10) selon une quelconque revendication précédente, comportant un deuxième élément de guidage (20) disposé parallèlement à et espacé du premier élément de guidage (20), et éventuellement dans lequel les premier et deuxième éléments de guidage (20) sont raccordés à un élément plan (18) et éventuellement l'élément plan est fait d'une seule feuille de matériau, et / ou dans lequel le deuxième élément de guidage (20) met en prise un autre dispositif de chariot (40) et éventuellement une paire d'autres dispositifs de chariot .

9. Un appareil de transport de charge (10) selon une quelconque revendication précédente, dans lequel les première et / ou deuxième parties de mise en prise (48, 58) du ou de chaque dispositif de chariot (40) comprennent des roulements à billes.

10. Un appareil de transport de charge (10) selon une quelconque des revendications 1 à 9, dans lequel les première et / ou deuxième parties de mise en prise (48, 58) du dispositif de chariot (40) sont au moins partiellement faites en nylon.

11. Un appareil de transport de charge (10) selon une quelconque revendication précédente, dans lequel le dispositif accumulateur (206) comprend une première chambre (206a) raccordée fluidiquement à la pompe (204) et au piston (202) et une deuxième chambre (206b) remplie d'air compressible.

12. Un appareil de transport de charge (10) selon une quelconque revendication précédente, dans lequel, quand il y a une baisse de pression sur le dispositif de mise en prise de charge (16), l'accumulateur (206) libère du fluide dans le piston (202) et amène le dispositif de mise en prise de charge à s'élever et / ou, quand il y a une augmentation de pression dans le dispositif de mise en prise de charge, l'accumulateur accumule du fluide et amène le dispositif de mise en prise de charge à s'abaisser.

13. Un appareil de transport de charge (10) selon une quelconque revendication précédente, dans lequel la roue de mise en prise de surface (14) est entraînée en rotation par un moteur et / ou la roue de mise en prise de surface est orientable.

14. Un appareil de transport de charge (10) selon une quelconque revendication précédente, dans lequel le dispositif de chariot (40) s'étend généralement parallèlement à l'élément de guidage (20) et / ou dans lequel la première partie de mise en prise (48) s'étend généralement parallèlement à la première surface de contact (24) et la deuxième partie de mise en prise (58) s'étend généralement parallèlement à la deuxième surface de contact (34).

15. Un appareil de transport de charge (10) selon une quelconque revendication précédente, comportant une roue pivotante (14a) ayant un axe de pivotement et / ou comportant une paire de roues à rotation libre (14b) et / ou qui convient à déplacer une charge (100) allant jusqu'à environ 70 000 kg.
